# EUROPEAN PATENT APPLICATION

(11) **EP 4 786 252 A1**
(43) Date of publication of application: **05.08.2026**
(21) Application number: 25155294.9
(22) Date of filing: 31.01.2025
(51) Int. Cl.: B60L 15/20, B60K 6/547, B60W 30/18

(54) **A COMPUTER SYSTEM COMPRISING PROCESSING CIRCUITRY TO CONTROL A TRANSMISSION OF A VEHICLE**

(71) Applicant: Volvo Truck Corporation, 405 08 Göteborg (SE)
(72) Inventor: Winblad, Hanna, 433 62 Sävedalen (SE); Jakobsson, Samuel, 418 73 Göteborg (SE); Rydquist, Kristoffer, 427 40 Billdal (SE); Svärling, Emma, 417 56 Göteborg (SE); Magnusson, Andreas, 443 92 Lerum (SE)
(74) Representative: Valea AB

(57) **Abstract**

The present disclosure relates to a computer system (400) and a method for controlling a transmission (20) of a vehicle, wherein the transmission (20) comprises an output shaft (25) and a set of input shafts (21, 22) comprising at least a first input shaft (21), the transmission being adapted to assume a plurality of transmission configurations, each transmission configuration resulting in a predetermined gear ratio between each input shaft (21, 22) in the set of input shafts and the output shaft (25), and wherein the vehicle comprises a regenerative braking system (30) adapted to convert at least a portion of the vehicle's kinetic energy into electric energy to be fed to an energy storage system (34) of the vehicle during a braking event. The method comprises:
- obtaining braking information indicating a required vehicle braking torque for a braking event;
- in response to determining that the braking torque deliverable from the regenerative braking system (30) with a currently assumed transmission configuration equals or exceeds the required vehicle braking torque, determining that the currently assumed transmission configuration should be maintained during the braking event and preferably issuing information to the transmission (20) to maintain the currently assumed transmission configuration.

## Description

### TECHNICAL FIELD

The disclosure relates generally to transmission configuration selection. In particular aspects, the disclosure relates to a computer system and/or a method of controlling a transmission of a vehicle. The disclosure also relates to a computer program product, and a non-transitory computer-readable storage medium. Moreover, the disclosure also relates to a vehicle which can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles are generally equipped with a transmission comprising a plurality of selectable and shiftable gears. The selection is primarily based on inputs from the accelerator and brake pedals, as well as data from various vehicle sensors, including those that monitor vehicle speed and/or engine load. The process of gear selection is highly complex, requiring adaptation to diverse driving scenarios. For instance, determining whether to downshift during a braking event may pose a challenge due to the variability of braking scenarios. The complexity may be further increased in electric vehicles, which may also consider energy recuperation in addition to braking dynamics when making gear selection decisions. For instance, opting not to downshift can sometimes be advantageous, as it may prevent power interruptions, allowing continuous energy recuperation during vehicle deceleration. However, downshifting may be beneficial in reaching a better operating point in terms of efficiency under certain conditions or enhancing braking capacity. Therefore, there is a strive to develop improved technology relating to gear selection.

### SUMMARY

According to a first aspect of the disclosure, a computer system is provided. The computer system comprises processing circuitry to control a transmission of a vehicle, wherein the transmission comprises an output shaft and a set of input shafts comprising at least a first input shaft, the transmission being adapted to assume a plurality of transmission configurations, each transmission configuration resulting in a predetermined gear ratio between each input shaft in the set of input shafts and the output shaft, the transmission configurations being different from each other, and wherein the vehicle comprises a regenerative braking system adapted to convert at least a portion of the vehicle's kinetic energy into electric energy to be fed to an energy storage system of the vehicle during a braking event, the regenerative braking system being drivingly connected to at least one, preferably each, input shaft in the set of input shafts, and wherein the processing circuitry is further configured to:
- obtain braking information indicating a required vehicle braking torque for a braking event;
- in response to determining that the braking torque deliverable from the regenerative braking system with a currently assumed transmission configuration equals or exceeds the required vehicle braking torque, determine that the currently assumed transmission configuration should be maintained during the braking event and preferably issue information to the transmission to maintain the currently assumed transmission configuration.

The first aspect of the disclosure may seek to provide an improved computer system that may avoid unnecessary shift of transmission configuration during braking events. For instance, by using information about the deliverable braking torque from the regenerative braking system and the required vehicle braking torque, it may be possible to determine whether the current transmission configuration can be maintained while staying within the regenerative braking system's capacity. This may ensure that the current transmission configuration is maintained, provided that the regenerative braking system can fully satisfy the required vehicle braking torque without the need for assistance from other braking systems. A technical benefit may be enhanced energy efficiency during braking events.

Optionally in some examples, including in at least one preferred example, the processing circuitry is further configured to, in response to determining that the braking torque deliverable from the regenerative braking system with a currently assumed transmission configuration is lower than the required vehicle braking torque, assess whether a condition for maintaining the currently assumed transmission configuration is fulfilled. Instead of shifting the transmission configuration, the processing circuitry may firstly assess whether a condition for maintaining the currently assumed transmission configuration is fulfilled to avoid unnecessary shift, reducing disruptions to the regenerative braking process and ensuring uninterrupted energy recovery. A technical benefit may be enhanced energy efficiency during braking events.

Optionally in some examples, including in at least one preferred example, the processing circuitry is further configured to:
- for at least two transmission configurations, determine vehicle operating information, comprising at least a braking torque deliverable from the regenerative braking system via the transmission, presuming that a respective transmission configuration is assumed; and
- on the basis of the vehicle operating information, assess whether the condition for maintaining the currently assumed transmission configuration is fulfilled.

Optionally in some examples, including in at least one preferred example, the processing circuitry is further configured to:
- assess if any transmission configuration of the plurality of transmission configurations other than the currently assumed transmission configuration results in that the braking torque deliverable from the regenerative braking system is equal to or above the braking torque deliverable from the regenerative braking system with the currently assumed transmission configuration,
- determine that the condition for maintaining the currently assumed transmission configuration is fulfilled if no transmission configuration of the plurality of transmission configurations results in that the braking torque deliverable from the regenerative braking system via the transmission is equal to or above the braking torque deliverable from the regenerative braking system with the currently assumed transmission configuration.

In some examples, an assessment if any other transmission configuration can result in that the braking torque deliverable from the regenerative braking system being equal to or above the braking torque deliverable from the regenerative braking system with a currently assumed transmission configuration may comprise determine a difference therebetween. If the difference is below a threshold, such as 5% in difference, it may indicate that switch to another transmission configuration cannot result in a substantial higher braking torque deliverable from the regenerative braking system. As such, it may be more appropriate to maintain the currently assumed transmission configuration, thereby avoiding unnecessary shift of transmission configuration. In these examples, an alternative braking system, such as a friction braking system, may be activated to provide the additional braking torque required. Alternatively, if the braking time is not critical, the regenerative braking system may provide the current available braking torque for the braking event, potentially leading to a longer braking duration while maintaining uninterrupted energy recuperation. A technical benefit may include enhanced energy efficiency during braking events.

Optionally in some examples, including in at least one preferred example, the braking torque deliverable from the regenerative braking system is determined based on one or more of the following parameters: a maximum allowed torque that can be imparted on the regenerative braking system, a current state-of-energy level of the energy storage system, a maximum allowed mechanical constraint that can be imposed by a drive shaft drivingly connected to the output shaft, a maximum allowed mechanical constraint that can be imposed by drive shaft bearings supporting the drive shaft, and the resulting gear ratio of the assumed transmission configuration.

Herein, the deliverable braking torque may refer to a total amount of torque that the regenerative braking system can produce and transfer to at least one wheels for slowing down or for stopping the vehicle. There are a plurality of parameters that may impact this amount of braking torque. For instance, depending on a real-time state-of -energy level of the energy storage system, the amount of electric energy can be delivered to the energy storage system may vary. Consequently, the braking torque produced by the regenerative braking system may also differ, as it cannot generate more energy than the energy storage system can receive. Moreover, each one of the gear ratios may correspond to a ratio of rotational speeds of the first input shaft and the output shaft, which may impact the proportion of the braking torque transferred from the regenerative braking system to at least one wheels. Additionally, the amount of deliverable braking torque may also depend on physical limits of driveline components including the first electric motor, the drive shaft and/or the drive shaft bearings.

By using the above parameters, a technical benefit may include that a more accurate braking torque deliverable from the regenerative braking system is determined. This may allow for the selection of an appropriate transmission configuration, enhancing a braking performance.

Optionally in some examples, including in at least one preferred example, the regenerative braking system comprises at least a first electric motor connected to the first input shaft of the set of input shafts and adapted to operate as a generator during the braking event.

Optionally in some examples, including in at least one preferred example, the set of set of input shafts comprises at least two input shafts.

Optionally in some examples, including in at least one preferred example, the set of input shafts further comprises a second input shaft. The regenerative braking system further comprises a second electric motor connected to the second input shaft of the set of input shafts and adapted to operate as a generator during the braking event.

Optionally in some examples, including in at least one preferred example, the vehicle operating information further comprises one or more of the following parameters: a driveline efficiency associated with a transferrable power from a vehicle's power unit to a set of wheels, and a difference between the braking torque deliverable from the regenerative braking system and the required braking torque.

Herein, driveline efficiency may correspond to a percentage of power generated by a vehicle's power unit that is effectively transmitted to the wheels by taking power loss into consideration. Different transmission configurations may result in different power loss due to various factors, e.g., differences in frictional losses. By considering the power efficiency and the braking capacity to assess whether the condition for maintaining the currently assumed transmission configuration is fulfilled, a technical benefit may include that an appropriate transmission configuration may be selected.

Optionally in some examples, including in at least one preferred example, the transmission configuration is assumed by engaging at least one gear from a plurality of shiftable gears of said transmission, wherein each one of the parameters from the vehicle operating information is determined for an instant value upon engagement of a respective gear, and a cumulative value over a period of time following the engagement of a respective gear. Purely by way of example, the period of time may be 10 seconds following the engagement of the gear. Instant evaluation upon gear engagement may help to evaluate the immediate performance upon the gear shift while sustained evaluation after gear engagement may allow the evaluation to adapt to evolving conditions. By considering both aspects, a technical benefit may include that an appropriate transmission configuration may be selected.

Optionally in some examples, including in at least one preferred example, the processing circuitry is further configured to:
- obtain a current vehicle speed; and
- in response to determining that the current vehicle speed is below a speed limit threshold, determine that the condition for maintaining the currently assumed transmission configuration is fulfilled.

Purely by way of example, the speed limit threshold may be set at 30 km/h. As such, it may prevent sudden interruptions in braking torque when the vehicle is operating at a low speed. During gear shifts, without proper management, there may be a noticeable interruption in braking force, leading to a rough and uncomfortable driving experience. A technical benefit may include enhanced control when driving at a lower speed.

In some examples, the current vehicle speed may be directly used to determine the condition for maintaining the currently assumed transmission configuration when a braking event is predicted, e.g., without the need to obtain the required vehicle braking torque and/or the braking torque deliverable from the regenerative braking system with a currently assumed transmission configuration.

Optionally in some examples, including in at least one preferred example, wherein the transmission, preferably the output shaft thereof, is drivingly connectable to a range gear arrangement comprising a low range gear state and a high range gear state, wherein a gear ratio over the range gear arrangement in the low range gear state is higher than a gear ratio in the high range gear state, wherein the processing circuitry is further configured to:
- obtain range gear arrangement information indicating a current range gear state; and
- in response to determining that the high range gear state is currently engaged, determine that the condition for maintaining the currently assumed transmission configuration is fulfilled.

When the range gear arrangement is drivingly connected to the transmission, the transmission and the range gear arrangement may together provide a set of low range gears and a set of high range gears, which may constitute different transmission configurations. As such, maintaining the currently assumed transmission may indicate maintaining the current range gear state. Typically, during a process of shifting the range gear arrangement between the low range gear state and the high range gear state, a complete cessation of power delivery from a power unit to a set of wheels may occur. By maintaining the currently assumed transmission also the current gear state, it may avoid the power cut during a braking event.

In some examples, the current range gear state may be directly used to determine the condition for maintaining the currently assumed transmission configuration when a braking event is predicted, e.g., without the need to obtain the required vehicle braking torque and/or the braking torque deliverable from the regenerative braking system with a currently assumed transmission configuration.

Optionally in some examples, including in at least one preferred example, the braking information is obtained from a signal indicating a position of a brake pedal, or a signal indicating a braking request from a cruise controller.

Optionally in some examples, including in at least one preferred example, the processing circuitry is further configured to determine that the currently assumed transmission configuration should be maintained during the braking event and preferably issue information to the transmission to maintain the currently assumed transmission configuration, if it is determined that a condition for maintaining the currently assumed transmission configuration is fulfilled.

According to a second aspect of the disclosure, a vehicle is provided. The vehicle comprises a transmission that in turn comprises an output shaft and a set of input shafts comprising at least a first input shaft. The transmission is adapted to assume a plurality of transmission configurations, each transmission configuration resulting in a predetermined gear ratio between each input shaft in the set of input shafts and the output shaft, the transmission configurations being different from each other, and a regenerative braking system adapted to convert at least a portion of the vehicle's kinetic energy into electric energy to be fed to an energy storage system of the vehicle during a braking event. The vehicle further comprises the computer system according to any one of examples of the first aspect of the disclosure. Advantages and technical benefits of the powertrain according to the second aspect of the disclosure are analogous to the advantages and technical benefits of the first aspect of the disclosure.

Optionally in some examples, including in at least one preferred example, the regenerative braking system comprises at least a first electric motor connected to the first input shaft of the set of input shafts and adapted to operate as a generator during the braking event.

Optionally in some examples, including in at least one preferred example, the set of set of input shafts comprises at least two input shafts.

According to a third aspect of the disclosure, a computer-implemented method for controlling a transmission of a vehicle is provided. The transmission comprises an output shaft and a set of input shafts comprises at least a first input shaft, and the transmission is adapted to assume a plurality of transmission configurations, each transmission configuration resulting in a predetermined gear ratio between each input shaft in the set of input shafts and the output shaft, the transmission configurations being different from each other. The vehicle comprises a regenerative braking system adapted to convert at least a portion of the vehicle's kinetic energy into electric energy to be fed to an energy storage system of the vehicle during a braking event. The regenerative braking system is drivingly connected to at least one, preferably each, input shaft in the set of input shafts. The method comprises:
- obtaining, by processing circuitry of a computer system, braking information indicating a required vehicle braking torque for a braking event;
- in response to determining that the braking torque deliverable from the regenerative braking system with a currently assumed transmission configuration equals or exceeds the required vehicle braking torque, determining, by processing circuitry, that the currently assumed transmission configuration should be maintained during the braking event and preferably issuing, by processing circuitry, information to the transmission to maintain the currently assumed transmission configuration.

Optionally in some examples, including in at least one preferred example, the method further comprises:
- in response to determining that the braking torque deliverable from the regenerative braking system with a currently assumed transmission configuration is lower than the required vehicle braking torque, assessing, by the processing circuitry, whether a condition for maintaining the currently assumed transmission configuration is fulfilled.

Optionally in some examples, including in at least one preferred example, the method according further comprises:
- for at least two transmission configurations, determining, by the processing circuitry, vehicle operating information, comprising at least a braking torque deliverable from the regenerative braking system via the transmission, presuming that a respective transmission configuration is assumed; and
- on the basis of the vehicle operating information, assessing, by the processing circuitry, whether the condition for maintaining the currently assumed transmission configuration is fulfilled.

Optionally in some examples, including in at least one preferred example, the method further comprises:
- assessing, by the processing circuitry, if any transmission configuration of the plurality of transmission configurations other than the currently assumed transmission configuration results in that the braking torque deliverable from the regenerative braking system is equal to or above the braking torque deliverable from the regenerative braking system with the currently assumed transmission configuration; and
- determining, by the processing circuitry, that the condition for maintaining the currently assumed transmission configuration is fulfilled if no transmission configuration of the plurality of transmission configurations results in that the braking torque deliverable from the regenerative braking system via the transmission is equal to or above the braking torque deliverable from the regenerative braking system with the currently assumed transmission configuration.

Optionally in some examples, including in at least one preferred example, the braking torque deliverable from the regenerative braking system is determined based on one or more of the following parameters: a maximum allowed torque that can be imparted on the regenerative braking system, a current state-of-energy level of the energy storage system, a maximum allowed mechanical constraint that can be imposed by a drive shaft drivingly connected to said output shaft, a maximum allowed mechanical constraint that can be imposed by drive shaft bearings supporting said drive shaft, and the resulting gear ratio of the assumed transmission configuration.

Optionally in some examples, including in at least one preferred example, the regenerative braking system comprises at least a first electric motor connected to the first input shaft of the set of input shafts and adapted to operate as a generator during the braking event.

Optionally in some examples, including in at least one preferred example, the set of set of input shafts comprises at least two input shafts.

Optionally in some examples, including in at least one preferred example, the set of input shafts further comprises a second input shaft, and wherein the regenerative braking system further comprises a second electric motor connected to the second input shaft of the set of input shafts and adapted to operate as a generator during the braking event.

Optionally in some examples, including in at least one preferred example, the vehicle operating information further comprises one or more of the following parameters: a driveline efficiency associated with a transferrable power from a vehicle's power unit to a set of wheels , and a difference between the braking torque deliverable from the regenerative braking system and the required braking torque.

Optionally in some examples, including in at least one preferred example, the transmission configuration is assumed by engaging at least one gear from a plurality of shiftable gears of said transmission, wherein each one of the parameters from the vehicle operating information is determined for an instant value upon engagement of a respective gear, and a cumulative value over a period of time following the engagement of a respective gear.

Optionally in some examples, including in at least one preferred example, the method further comprises:
- obtaining, by the processing circuitry, a current vehicle speed; and
- in response to determining that the current vehicle speed is below a speed limit threshold, determining, by the processing circuitry, that the condition for maintaining the currently assumed transmission configuration is fulfilled.

Optionally in some examples, including in at least one preferred example, the transmission, preferably the output shaft thereof, is drivingly connectable to a range gear arrangement comprising a low range gear state and a high range gear state, wherein a gear ratio over the range gear arrangement in the low range gear state is higher than a gear ratio in the high range gear state. The method further comprises:
- obtaining, by the processing circuitry, range gear arrangement information indicating a current range gear state; and
- in response to determining that the high range gear state is currently engaged, determining, by the processing circuitry, that the condition for maintaining the currently assumed transmission configuration is fulfilled.

Optionally in some examples, including in at least one preferred example, the braking information is obtained from a signal indicating a position of a brake pedal, or a signal indicating a braking request from a cruise controller.

Optionally in some examples, including in at least one preferred example, the method further comprises issuing, by the processing circuitry, information to the transmission to maintain the currently assumed transmission configuration, if it is determined that a condition for maintaining the currently assumed transmission configuration is fulfilled.

According to a fourth aspect of the disclosure, a computer program product is provided. The computer program product comprises program code for performing, when executed by the processing circuitry, the method according to the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic side view of a vehicle according to an example;
**FIG. 2a****-****FIG. 2c** are schematic views of a transmission of a vehicle;
**FIG. 3** schematically shows a power transfer flow in a vehicle;
**FIG.4a****-****FIG.4c** are flow charts illustrating a method of controlling a transmission of a vehicle; and
**FIG. 5** is a schematic diagram of an exemplary computer system for implementing methods disclosed herein.

### DETAILED DESCRIPTION

The detailed description set forth below provides information and examples of the disclosed technology with sufficient detail to enable those skilled in the art to practice the disclosure.

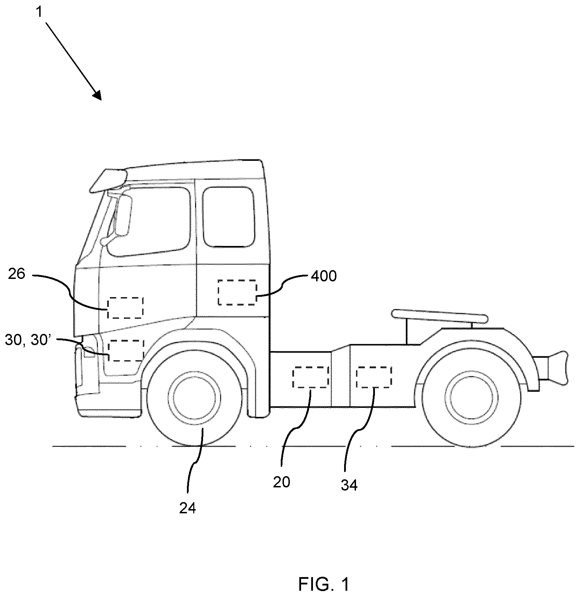

**FIG. 1** depicts a vehicle 1, which is exemplified by an electric truck. Even though an electric truck is shown, it shall be noted that the disclosure is not limited to this type of vehicle, but it may also be used for other electric vehicles, such as a bus, construction equipment, e.g., a wheel loader or an excavator. The present disclosure is also applicable for a hybrid vehicle, e.g. a vehicle comprises a combustion engine and an electric engine.

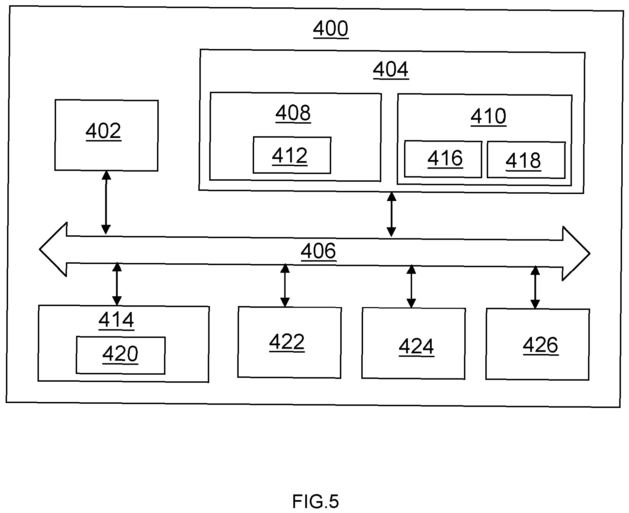

The vehicle 1 comprises a power unit 26, which may comprise an electric engine comprising at least one electric motor. The power unit 26 in some examples may additionally comprise an internal combustion engine. The power unit 26 may be configured to provide propulsion power to the vehicle 1 via a transmission 20. The transmission 20 may convert a torque generated by the power unit 26 to a torque that is suitable for driving at least one wheels 24 and transfer the torque to the least one wheel 24. Moreover, the vehicle 1 comprises a braking system 30' which in turn comprises at least a regenerative braking system 30. The regenerative braking system 30 is adapted to convert at least a portion of the vehicle's kinetic energy into electric energy to be fed into an energy storage system 34 during a braking event. The transmission 20 may convert a braking torque produced by the regenerative braking system 30 to a torque that is suitable for slowing down or stopping the vehicle 1 and transfer this torque to at least one wheel 24. The braking system 30' may additionally comprise a friction braking system (not shown), which may rely on mechanical friction for slowing down or stopping the vehicle 1. Purely by way of example, the friction braking may be achieved by applying a friction force, such as by pressing brake pads, against rotating components, such as drums or discs attached to vehicle wheels 24. The vehicle 1 further comprises a computer system 400, which may comprise one or more control units, such as processing circuitry 402 (see FIG. 5) that may be communicatively connected to the transmission 20 and may issue control data for controlling the transmission 20 during operation of the vehicle 1.

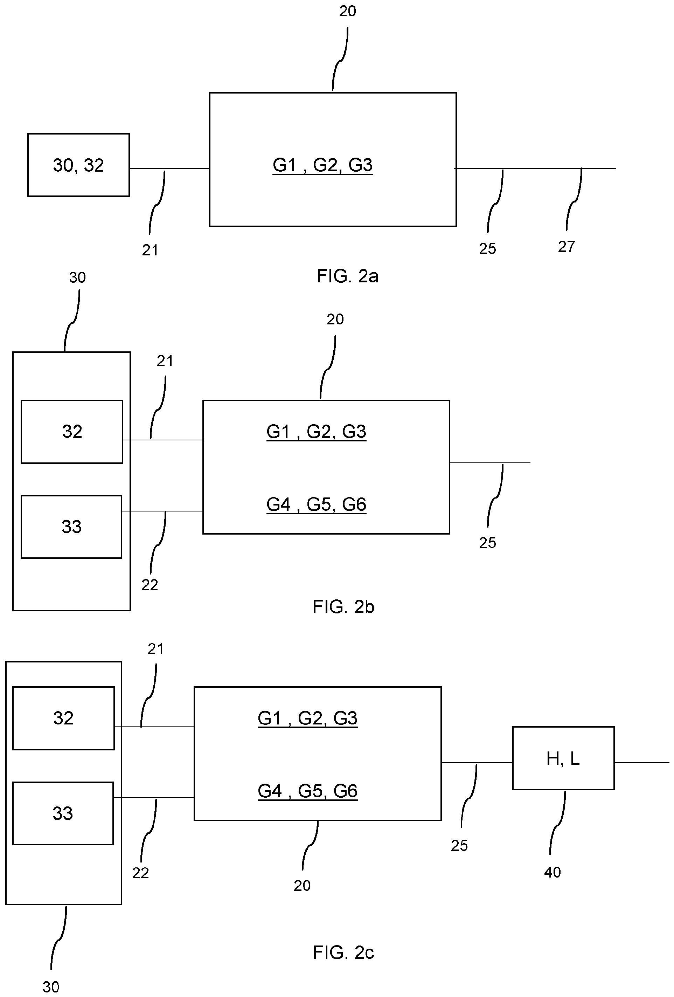

**FIG. 2a****-** **FIG. 2c** schematically show three examples of a transmission of a vehicle 1, such as the FIG. 1 vehicle. Each example of the transmission comprises an output shaft 25 and a set of input shafts 21, 22 comprising at least a first input shaft 21. The transmission is adapted to assume a plurality of transmission configurations, whereby each transmission configuration results in a predetermined gear ratio between each input shaft in the set of input shafts and the output shaft. In the first example shown in **FIG. 2a****,** the transmission 20 comprises a set of input shafts comprising a first input shaft 21. The first input shaft 21 is drivingly connected to the regenerative braking system 30, which in this example, comprises a first electric motor 32. The first electric motor 32 is adapted to operate as a generator during the braking event, producing the electric energy to be fed to an energy storage system (not shown in Fig. 2a). The transmission 20 further comprises an output shaft 25, which may be connected to a drive shaft 27 of the vehicle 1. The transmission 20 is adapted to assume a plurality of transmission configurations, whereby each transmission configuration results in a predetermined gear ratio between each input shaft 21 and the output shaft 25. For instance, the transmission 20 may comprise a plurality of gears G1, G2 and G3, each of which may comprise two or more gearwheels with a predetermined gear ratio. The transmission configuration may be assumed by engaging one gear from the plurality of the gears G1, G2, G3, preferably by using a gear engaging device (not shown). The gear ratio may correspond to rotational speeds of the first input shaft 21 and the output shaft 25, which may impact the proportion of braking torque transferred from the regenerative braking system 30 to the set of the wheels 24. It can therefore be concluded that depending on the assumed transmission configuration or the resulting gear ratio, the braking torque deliverable by the regenerative braking system 30 may vary.

In some examples, such as the **FIG. 2b** example, the set of input shafts further comprises a second input shaft 22, and the regenerative braking system 30 further comprises a second electric motor 33 being connected to the second input shaft 22. In the shown examples, the transmission 20 may enable each one of the electric motors 32, 33 to engage one gear from the plurality gears G1, G2, G3 or G4, G5, G6 simultaneously. For instance, in one transmission configuration, the first electric motor 31 may engage with G1, while the second electric motor 3 may engage with G3. In these examples, the deliverable braking torque may primarily depend on the physical limit of each one of the first and second electric motors 31 32, and the gears G1, G3 that each one of the first and second electric motors 31 32 engage. In some other examples, both of the electric motors 32,33 may share a single gear set and may engage the same one gear from the single gear set.

In some examples, such as the **FIG. 2c** example, the transmission 20, such as the output shaft 25 of the transmission 20, is drivingly connectable to a range gear arrangement 40 shiftable between a low range gear state L and a high range gear state H, whereby a gear ratio over the range gear arrangement 40 in the low range gear state is higher than a gear ratio in the high range gear state. Purely by way of example, the range gear arrangement 40 may comprise one gear state with a direct 1: 1 gear or speed ratio, corresponding to the high range gear state, and another gear state with a speed reduction corresponding to the low range gear state. When the range gear arrangement 40 is drivingly connected to the transmission 20, the transmission 20 and the range gear arrangement 40 may together provide a set of low range gears and a set of high range gears, which may constitute different transmission configurations resulting different gear ratios.

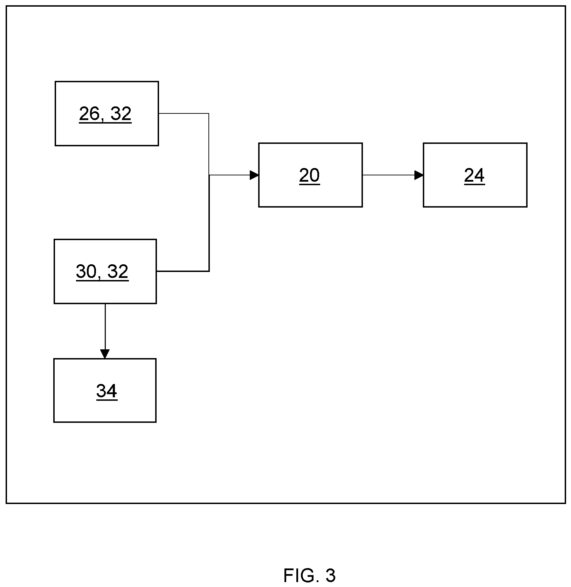

**FIG. 3** schematically shows a power transfer flow in a vehicle. As mentioned before, the vehicle 1 comprises the power unit 26 configured to provide propulsion power to drive at least one wheel 24 via the transmission 20. Moreover, the vehicle 1 comprises the regenerative braking system 30 configured to provide braking torque to slow down at least one wheel 24 via the transmission 20. The regenerative braking system 30 comprises at least a first electric motor 32 connected to the first input shaft 21 of the set of input shafts and adapted to operate as a generator during the braking event, producing the electric energy to be fed to the energy storage system 34 during braking of the vehicle. In the shown example, the first electric motor 32 is also comprised in the power unit 26. During a braking event, the first electric motor 32 may be controlled to be operated in a reverse direction to function as a generator The first electric motor 32 may in this example be seen as forming part of or even constituting the regenerative braking system 30. As another alternative, although not shown in the figure, the regenerative braking system 32 may be a separate entity, e.g. an electric motor, and the power unit 26 may be an internal combustion engine.

Depending on a real-time state-of -energy level of the energy storage system 34, the amount of electric energy can be delivered to the energy storage system 34 can vary. Consequently, the braking torque generated by the electric motor 32, when functioning as a generator, may also differ. This is because the electric motor 32 cannot generate more energy than the energy storage system 34 can receive. To this end, it may be concluded that the braking torque deliverable by the regenerative braking system 30 may vary depending on the configuration of the transmission that is assumed, a state-of-energy level of the energy storage system 34, and a maximum allowed torque that can be imparted on the first electric motor 32 since it defines its physical maximum limit of the capacity of the motor. In some examples, a maximum allowed mechanical constraint that can be imposed by a drive shaft 27 drivingly connected to the output shaft 25, and a maximum allowed mechanical constraint that can be imposed by drive shaft bearings supporting the drive shaft 27 may also impact the amount of braking torque deliverable by the regenerative braking system 30.

**FIG. 3** illustrates a method of controlling a transmission of a vehicle. The method may be performed by processing circuitry of a computer system 400, such as the vehicle onboard computer system 400. The method comprises at least one of the actions listed in the following, which, unless otherwise indicated, may be taken in any suitable order.

S 1: obtaining braking information indicating a required vehicle braking torque for a braking event. The braking information may be obtained via at least one of the following: a signal indicating a position of a brake pedal, possibly from a brake pedal sensor, or a signal indicating a braking request from a cruise controller.

S2: in response to determining that the braking torque deliverable from the regenerative braking system 30 with a currently assumed transmission configuration equals or exceeds the required vehicle braking torque, determining that the currently assumed transmission configuration should be maintained during the braking event and preferably issuing information to the transmission to maintain the currently assumed transmission configuration. Purely by way of example, in response to determining that the braking torque deliverable from the regenerative braking system 30 with a currently assumed transmission configuration equals or exceeds the required vehicle braking torque, the method need not issue information to the transmission whereby the transmission will maintain its currently assumed transmission configuration. However, as indicated above, it is also envisaged that the method may comprise issuing information to the transmission to maintain the currently assumed transmission configuration.

S3: in response to determining that the braking torque deliverable from the regenerative braking system with the currently assumed transmission configuration is lower than the required vehicle braking torque, assessing whether a condition for maintaining the currently assumed transmission configuration is fulfilled.

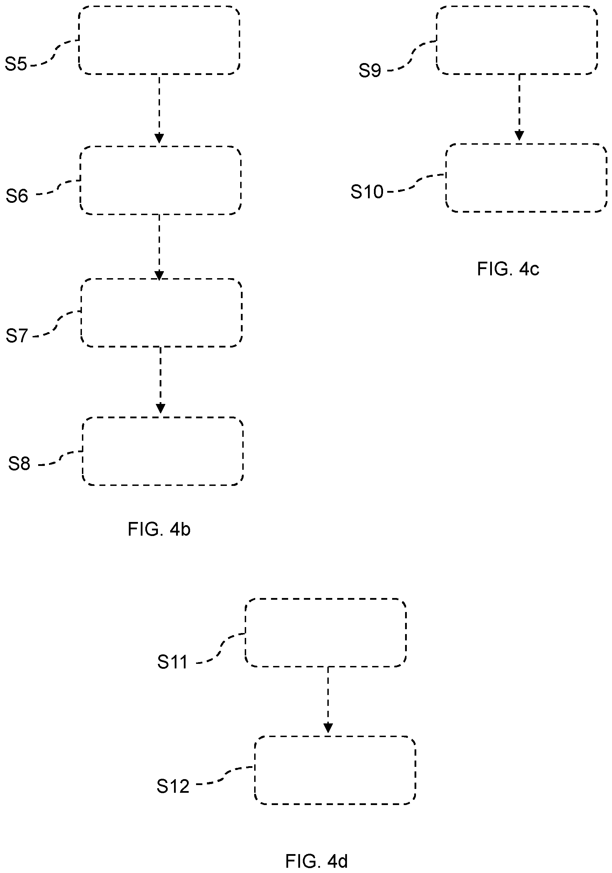

If it is determined that that the braking torque deliverable from the regenerative braking system 30 with the currently assumed transmission configuration equals or exceeds the required braking torque, the processing circuitry 402 may control the transmission 20 to stay in the current transmission configuration and terminate the transmission configuration selection procedure. If it is determined that the braking torque deliverable from the regenerative braking system 30 with the currently assumed transmission configuration is below the required braking torque, instead of shifting a transmission configuration, the processing circuitry 402 may assess whether a condition for maintaining the currently assumed transmission configuration is fulfilled. In this case, the method may further comprise the following actions as presented in FIG. 4b:
S5: for at least two transmission configurations, determining vehicle operating information, comprising at least a braking torque deliverable from the regenerative braking system 30 via the transmission 20, presuming that a respective transmission configuration is assumed; and
S6: on the basis of the vehicle operating information, assessing whether the condition for maintaining the currently assumed transmission configuration is fulfilled.
S7: assessing if any transmission configuration of the plurality of transmission configurations other than the currently assumed transmission configuration results in that the braking torque deliverable from the regenerative braking system 30 is equal to or above the braking torque deliverable from the regenerative braking system 30 with the currently assumed transmission configuration.
S8: determining that the condition for maintaining the currently assumed transmission configuration is fulfilled if no transmission configuration of the plurality of transmission configurations results in that the braking torque deliverable from the regenerative braking system 30 via the transmission 20 is equal to or above the braking torque deliverable from the regenerative braking system 30 with the currently assumed transmission configuration.

In some examples, assess if any other transmission configuration can result in that the braking torque deliverable from the regenerative braking system being equal to or above the braking torque deliverable from the regenerative braking system with the currently assumed transmission configuration may comprise determine a difference therebetween. If the difference is below a threshold, such as 5% in difference, it may indicate that switch to another transmission configuration cannot result in a substantial higher braking torque deliverable from the regenerative braking system. As such, it may be more appropriate to maintain the currently assumed transmission configuration, thereby avoiding unnecessary shift of transmission configuration. In these examples, an alternative braking system, such as a friction braking system, may be activated to provide the additional braking torque required. Alternatively, if the braking time is not critical, the regenerative braking system may provide the current available braking torque for the braking event, potentially leading to a longer braking duration while maintaining uninterrupted energy recuperation.

As mentioned above, the braking torque deliverable from the regenerative braking system 30 may be determined based on one or more of the following parameters: a maximum allowed torque that can be imparted on the regenerative braking system 30, a current state-of-energy level of the energy storage system 34, a maximum allowed mechanical constraint that can be imposed by a drive shaft 27 drivingly connected to the output shaft 25, a maximum allowed mechanical constraint that can be imposed by drive shaft bearings supporting the drive shaft 27, and the resulting gear ratio of the assumed transmission configuration.

In some examples, the at least one vehicle operating parameter further comprises one or more of the following parameters: a drive line efficiency associated with a transmittable power from a power produced by a vehicle's power unit 26 to a set of wheels, a difference between the braking torque deliverable from the regenerative braking system 30 and the required braking torque. Moreover, in some examples, the vehicle operating parameter is determined for an instant upon engagement of the respective gear, and for a period of time following the engagement of the respective gear, for instance, 10 seconds following the engagement of the respective gear.

In some examples, the method may further comprise the following actions as presented in FIG. 4c:
S9: obtaining a current vehicle speed; and
S10: in response to determining that the current vehicle speed is below a speed limit threshold, determining that the condition for maintaining the currently assumed transmission configuration is fulfilled.

Purely by way of example, the speed limit threshold may be set at 30 km/h. As such, it may prevent sudden interruptions in braking torque when the vehicle is operating at a relatively low speed. During gear shifts, without proper management, there may be a noticeable interruption in braking force, leading to a rough and uncomfortable driving experience.

In some examples, the current vehicle speed may be directly used to determine the condition for maintaining the currently assumed transmission configuration when a braking event is predicted, e.g., without the need to obtain the required vehicle braking torque and/or the braking torque deliverable from the regenerative braking system with the currently assumed transmission configuration.

In the example where the transmission is drivingly connectable to a range gear arrangement, the method may further comprise the following actions as presented in FIG. 4d:
S 11: obtaining range gear arrangement information indicating a current range gear state; and
S12: in response to determining that the high range gear state is currently engaged, determining that the condition for maintaining the currently assumed transmission configuration is fulfilled.

This is due to the fact that typically, during a process of shifting the range gear arrangement between the low range gear state and the high range gear state, a complete cessation of power delivery from a power unit to a set of wheels may occur. By maintaining the currently assumed transmission configuration including maintaining the current range gear state, it may avoid the power cut during a braking event.

In some examples, the current range gear state may be directly used to determine the condition for maintaining the currently assumed transmission configuration when a braking event is predicted, e.g., without the need to obtain the required vehicle braking torque and/or the braking torque deliverable from the regenerative braking system with the currently assumed transmission configuration.

If it is determined that a condition, e.g., any of the above-mentioned condition, for maintaining the currently assumed transmission configuration is fulfilled, the processing circuitry 402 may determine that the currently assumed transmission configuration should be maintained during the braking event and preferably issue information to the transmission 20 to maintain the currently assumed transmission configuration.

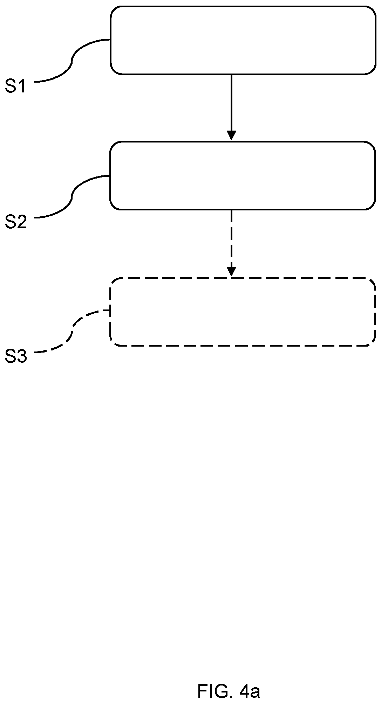

**FIG 4****.** illustrates a computer system 400, such as the vehicle on-board computer system 400, for performing the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.

Example 1: A computer system (400) comprising processing circuitry (402) to control a transmission (20) of a vehicle, wherein the transmission (20) comprises an output shaft (25) and a set of input shafts (21, 22) comprising at least a first input shaft (21), the transmission being adapted to assume a plurality of transmission configurations, each transmission configuration resulting in a predetermined gear ratio between each input shaft (21, 22) in the set of input shafts and the output shaft (25), the transmission configurations being different from each other, and wherein the vehicle comprises a regenerative braking system (30) adapted to convert at least a portion of the vehicle's kinetic energy into electric energy to be fed to an energy storage system (34) of the vehicle during a braking event, the regenerative braking system (30) being drivingly connected to at least one, preferably each, input shaft (21, 22) in the set of input shafts, and wherein the processing circuitry (402) is further configured to:
- obtain braking information indicating a required vehicle braking torque for a braking event;
- in response to determining that the braking torque deliverable from the regenerative braking system (30) with a currently assumed transmission configuration equals or exceeds the required vehicle braking torque, determine that the currently assumed transmission configuration should be maintained during the braking event and preferably issue information to the transmission (20) to maintain the currently assumed transmission configuration.

Example 2: The computer system (400) according to Example 1, wherein the processing circuitry (402) is further configured to:
- in response to determining that the braking torque deliverable from the regenerative braking system (30) with the currently assumed transmission configuration is lower than the required vehicle braking torque, assess whether a condition for maintaining the currently assumed transmission configuration is fulfilled.

Example 3: The computer system (400) according to Example 2, wherein the processing circuitry (402) is further configured to:
- for at least two transmission configurations, determine vehicle operating information, comprising at least a braking torque deliverable from the regenerative braking system (30) via the transmission (20), presuming that a respective transmission configuration is assumed; and
- on the basis of the vehicle operating information, assess whether the condition for maintaining the currently assumed transmission configuration is fulfilled.

Example 4: The computer system (400) according to Example 3, wherein the processing circuitry (402) is further configured to:
- assess if any transmission configuration of the plurality of transmission configurations other than the currently assumed transmission configuration results in that the braking torque deliverable from the regenerative braking system (30) plurality of transmission configurations is equal to or above the braking torque deliverable from the regenerative braking system (30) with the currently assumed transmission configuration,
- determine that the condition for maintaining the currently assumed transmission configuration is fulfilled if no transmission configuration of the plurality of transmission configurations results in that the braking torque deliverable from the regenerative braking system (30) via the transmission (20) is equal to or above the braking torque deliverable from the regenerative braking system (30) with the currently assumed transmission configuration.

Example 5: The computer system (400) according to any one of Examples 3- 6, wherein the braking torque deliverable from the regenerative braking system (30) is determined based on one or more of the following parameters: a maximum allowed torque that can be imparted on the regenerative braking system (30), a current state-of-energy level of the energy storage system (34), a maximum allowed mechanical constraint that can be imposed by a drive shaft drivingly connected to said output shaft (25), a maximum allowed mechanical constraint that can be imposed by drive shaft bearings supporting the drive shaft, and the resulting gear ratio of the assumed transmission configuration.

Example 6: The computer system (400) according to any one of the preceding Examples, wherein the regenerative braking system (30) comprises at least a first electric motor (32) connected to the first input shaft (21) of the set of input shafts and adapted to operate as a generator during the braking event.

Example 7: The computer system (400) according to any one of the preceding Examples, wherein the set of set of input shafts (21, 22) comprises at least two input shafts (21, 22).

Example 8: The computer system (400) according to Example 7, wherein the set of input shafts (21, 22) further comprises a second input shaft (22), and wherein the regenerative braking system (30) further comprises a second electric motor (33) connected to the second input shaft (22) of the set of input shafts and adapted to operate as a generator during the braking event.

Example 9: The computer system (400) according to any one of Examples 3- 8, wherein the vehicle operating information further comprises one or more of the following parameters: a driveline efficiency associated with a transferrable power from a vehicle's power unit (26) to a set of wheels (24), and a difference between the braking torque deliverable from the regenerative braking system (30) and the required braking torque.

Example 10: The computer system (400) according to any one of Examples 3-9, wherein the transmission configuration is assumed by engaging at least one gear from a plurality of shiftable gears of said transmission, wherein each one of the parameters from the vehicle operating information is determined for an instant value upon engagement of a respective gear, and a cumulative value over a period of time following the engagement of a respective gear.

Example 11: The computer system (400) according to any one of Examples 2-11, wherein the processing circuitry (402) is further configured to:
- obtain a current vehicle speed; and
- in response to determining that the current vehicle speed is below a speed limit threshold, determine that the condition for maintaining the currently assumed transmission configuration is fulfilled.

Example 12: The computer system (400) according to any one of Examples 2-12, wherein the transmission (20), preferably the output shaft (25) thereof, is drivingly connectable to a range gear arrangement (40) comprising a low range gear state and a high range gear state, wherein a gear ratio over the range gear arrangement (40) in the low range gear state is higher than a gear ratio in the high range gear state, wherein the processing circuitry (402) is further configured to:
- obtain range gear arrangement information indicating a current range gear state; and
- in response to determining that the high range gear state is currently engaged, determine that the condition for maintaining the currently assumed transmission configuration is fulfilled.

Example 13: The computer system (400) according to any one of the preceding Examples, wherein the braking information is obtained from a signal indicating a position of a brake pedal, or a signal indicating a braking request from a cruise controller.

Example 14: The computer system (400) according to any one of the preceding Examples, wherein the processing circuitry (402) is further configured to issue information to the transmission (20) to maintain the currently assumed transmission configuration, if it is determined that a condition for maintaining the currently assumed transmission configuration is fulfilled.

Example 15: A vehicle (1) comprising a transmission (20) that in turn comprises an output shaft (25) and a set of input shafts (21, 22) comprising at least a first input shaft (21); the transmission (20) being adapted to assume a plurality of transmission configurations, each transmission configuration resulting in a predetermined gear ratio between each input shaft in the set of input shafts and the output shaft (25), the transmission configurations being different from each other, and a regenerative braking system (30) adapted to convert at least a portion of the vehicle's kinetic energy into electric energy to be fed to an energy storage system (34) of the vehicle during a braking event, wherein the vehicle (1) further comprises the computer system (400) according to any one of Examples 1-14.

Example 16: The vehicle (1) according to Example 15, wherein the regenerative braking system (30) comprises at least a first electric motor (32) connected to the first input shaft (21) of the set of input shafts and adapted to operate as a generator during the braking event.

Example 17: The computer system (400) according to any one of Examples 15-16, wherein the set of set of input shafts (21, 22) comprises at least two input shafts (21, 22).

Example 18: A computer-implemented method for controlling a transmission (20) of a vehicle, wherein the transmission (20) comprises an output shaft (25) and a set of input shafts (21, 22) comprising at least a first input shaft (21), the transmission being adapted to assume a plurality of transmission configurations, each transmission configuration resulting in a predetermined gear ratio between each input shaft (21, 22) in the set of input shafts and the output shaft (25), the transmission configurations being different from each other, and wherein the vehicle comprises a regenerative braking system (30) adapted to convert at least a portion of the vehicle's kinetic energy into electric energy to be fed to an energy storage system (34) of the vehicle during a braking event, the regenerative braking system (30) being drivingly connected to at least one, preferably each, input shaft (21, 22) in the set of input shafts, wherein the method comprises:
- obtaining (S 1), by processing circuitry (402) of a computer system (400), braking information indicating a required vehicle braking torque for a braking event;
- in response to determining that the braking torque deliverable from the regenerative braking system (30) with a currently assumed transmission configuration equals or exceeds the required vehicle braking torque, determining, by processing circuitry (402), that the currently assumed transmission configuration should be maintained during the braking event and preferably issuing (S2), by processing circuitry (402), information to the transmission (20) to maintain the currently assumed transmission configuration.

Example 19: The method according to Example 18, further comprising:
- in response to determining that the braking torque deliverable from the regenerative braking system (30) with a currently assumed transmission configuration is lower than the required vehicle braking torque, assessing (S3), by the processing circuitry (402), whether a condition for maintaining the currently assumed transmission configuration is fulfilled.

Example 20: The method according to Example 19, further comprising:
- for at least two transmission configurations, determining (S5), by the processing circuitry (402), vehicle operating information, comprising at least a braking torque deliverable from the regenerative braking system (30) via the transmission (20), presuming that a respective transmission configuration is assumed; and
- on the basis of the vehicle operating information, assessing (S6), by the processing circuitry (402), whether the condition for maintaining the currently assumed transmission configuration is fulfilled.

Example 21: The method according to Example 20, further comprising:
- assessing (S7), by the processing circuitry (402), if any transmission configuration of the plurality of transmission configurations other than the currently assumed transmission configuration results in that the braking torque deliverable from the regenerative braking system (30) is equal to or above the braking torque deliverable from the regenerative braking system (30) with the currently assumed transmission configuration,
- determining (S8), by the processing circuitry (402), that the condition for maintaining the currently assumed transmission configuration is fulfilled if no transmission configuration of the plurality of transmission configurations results in that the braking torque deliverable from the regenerative braking system (30) via the transmission (20) is equal to or above the braking torque deliverable from the regenerative braking system (30) with the currently assumed transmission configuration.

Example 22: The method according to any one of Examples 20-21, wherein the braking torque deliverable from the regenerative braking system (30) is determined based on one or more of the following parameters: a maximum allowed torque that can be imparted on the regenerative braking system (30), a current state-of-energy level of the energy storage system (34), a maximum allowed mechanical constraint that can be imposed by a drive shaft drivingly connected to said output shaft (25), a maximum allowed mechanical constraint that can be imposed by drive shaft bearings supporting said drive shaft, and the resulting gear ratio of the assumed transmission configuration.

Example 23: The method according to any one of Examples 18-22, wherein the regenerative braking system (30) comprises at least a first electric motor (32) connected to the first input shaft (21) of the set of input shafts and adapted to operate as a generator during the braking event.

Example 24: The method according to any one of Examples 18-23, wherein the set of set of input shafts (21, 22) comprises at least two input shafts (21, 22).

Example 25: The method according to Example 24, wherein the set of input shafts (21, 22) further comprises a second input shaft (22), and wherein the regenerative braking system (30) further comprises a second electric motor (33) connected to the second input shaft (22) of the set of input shafts and adapted to operate as a generator during the braking event.

Example 26: The method according to any one of Examples 20-25, wherein the vehicle operating information further comprises one or more of the following parameters: a driveline efficiency associated with a transferrable power from a vehicle's power unit (26) to a set of wheels (24), and a difference between the braking torque deliverable from the regenerative braking system (30) and the required braking torque.

Example 27: The method according to any one of Examples 25-26, wherein the transmission configuration is assumed by engaging at least one gear from a plurality of shiftable gears of said transmission, wherein each one of the parameters from the vehicle operating information is determined for an instant value upon engagement of a respective gear, and a cumulative value over a period of time following the engagement of a respective gear.

Example 28: The method according to any one of Examples 19-27, further comprising:
- obtaining (S9), by the processing circuitry (402), a current vehicle speed; and
- in response to determining that the current vehicle speed is below a speed limit threshold, determining, (S10), by the processing circuitry (402), that the condition for maintaining the currently assumed transmission configuration is fulfilled.

Example 29: The method according to any one of Examples 19-28, wherein the transmission (20), preferably the output shaft (25) thereof, is drivingly connectable to a range gear arrangement (40) comprising a low range gear state and a high range gear state, wherein a gear ratio over the range gear arrangement (40) in the low range gear state is higher than a gear ratio in the high range gear state, wherein the method further comprises:
- obtaining (S11), by the processing circuitry (402), range gear arrangement information indicating a current range gear state; and
- in response to determining that the high range gear state is currently engaged, determining (S12), by the processing circuitry (402), that the condition for maintaining the currently assumed transmission configuration is fulfilled.

Example 30: The method according to any one of Examples 18-29, wherein the braking information is obtained from a signal indicating a position of a brake pedal, or a signal indicating a braking request from a cruise controller.

Example 31: The method according to any one of Examples 18-30, wherein the method further comprises issuing (S13), by the processing circuitry (402), information to the transmission (20) to maintain the currently assumed transmission configuration, if it is determined that a condition for maintaining the currently assumed transmission configuration is fulfilled.

Example 32: A computer program product comprising program code for performing, when executed by the processing circuitry (402), the method of any of Examples 18-31.

Example 33: A non-transitory computer-readable storage medium comprising instructions, which when executed by the processing circuitry (402), cause the processing circuitry (402) to perform the method of any of Examples 18-31.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) to control a transmission (20) of a vehicle, wherein the transmission (20) comprises an output shaft (25) and a set of input shafts (21, 22) comprising at least a first input shaft (21), the transmission being adapted to assume a plurality of transmission configurations, each transmission configuration resulting in a predetermined gear ratio between each input shaft (21, 22) in the set of input shafts and the output shaft (25), the transmission configurations being different from each other, and wherein the vehicle comprises a regenerative braking system (30) adapted to convert at least a portion of the vehicle's kinetic energy into electric energy to be fed to an energy storage system (34) of the vehicle during a braking event, the regenerative braking system (30) being drivingly connected to at least one, preferably each, input shaft (21, 22) in the set of input shafts, and wherein the processing circuitry (402) is further configured to:
- obtain braking information indicating a required vehicle braking torque for a braking event;
- in response to determining that the braking torque deliverable from the regenerative braking system (30) with a currently assumed transmission configuration equals or exceeds the required vehicle braking torque, determine that the currently assumed transmission configuration should be maintained during the braking event and preferably issue information to the transmission (20) to maintain the currently assumed transmission configuration.

2. A vehicle (1) comprising a transmission (20) that in turn comprises an output shaft (25) and a set of input shafts (21, 22) comprising at least a first input shaft (21); the transmission (20) being adapted to assume a plurality of transmission configurations, each transmission configuration resulting in a predetermined gear ratio between each input shaft in the set of input shafts and the output shaft (25), the transmission configurations being different from each other, and a regenerative braking system (30) adapted to convert at least a portion of the vehicle's kinetic energy into electric energy to be fed to an energy storage system (34) of the vehicle during a braking event, wherein the vehicle (1) further comprises the computer system (400) according to claim 1.

3. A computer-implemented method for controlling a transmission (20) of a vehicle, wherein the transmission (20) comprises an output shaft (25) and a set of input shafts (21, 22) comprising at least a first input shaft (21), the transmission being adapted to assume a plurality of transmission configurations, each transmission configuration resulting in a predetermined gear ratio between each input shaft (21, 22) in the set of input shafts and the output shaft (25), the transmission configurations being different from each other, and wherein the vehicle comprises a regenerative braking system (30) adapted to convert at least a portion of the vehicle's kinetic energy into electric energy to be fed to an energy storage system (34) of the vehicle during a braking event, the regenerative braking system (30) being drivingly connected to at least one, preferably each, input shaft (21, 22) in the set of input shafts, wherein the method comprises:
- obtaining (S 1), by processing circuitry (402) of a computer system (400), braking information indicating a required vehicle braking torque for a braking event;
- in response to determining that the braking torque deliverable from the regenerative braking system (30) with a currently assumed transmission configuration equals or exceeds the required vehicle braking torque, determining, by processing circuitry (402), that the currently assumed transmission configuration should be maintained during the braking event and preferably issuing (S2), by processing circuitry (402), information to the transmission (20) to maintain the currently assumed transmission configuration.

4. The method according to claim 3, further comprising:
- in response to determining that the braking torque deliverable from the regenerative braking system (30) with the currently assumed transmission configuration is lower than the required vehicle braking torque, assessing (S3), by the processing circuitry (402), whether a condition for maintaining the currently assumed transmission configuration is fulfilled.

5. The method according to claim 4, further comprising:
- for at least two transmission configurations, determining (S5), by the processing circuitry (402), vehicle operating information, comprising at least a braking torque deliverable from the regenerative braking system (30) via the transmission (20), presuming that a respective transmission configuration is assumed; and
- on the basis of the vehicle operating information, assessing (S6), by the processing circuitry (402), whether the condition for maintaining the currently assumed transmission configuration is fulfilled.

6. The method according to claim 5, further comprising:
- assessing (S7), by the processing circuitry (402), if any transmission configuration of the plurality of transmission configurations other than the currently assumed transmission configuration results in that the braking torque deliverable from the regenerative braking system (30) is equal to or above the braking torque deliverable from the regenerative braking system (30) with the currently assumed transmission configuration,
- determining (S8), by the processing circuitry (402), that the condition for maintaining the currently assumed transmission configuration is fulfilled if no transmission configuration of the plurality of transmission configurations results in that the braking torque deliverable from the regenerative braking system (30) via the transmission (20) is equal to or above the braking torque deliverable from the regenerative braking system (30) with the currently assumed transmission configuration.

7. The method according to any one of claims 5-6, wherein the braking torque deliverable from the regenerative braking system (30) is determined based on one or more of the following parameters: a maximum allowed torque that can be imparted on the regenerative braking system (30), a current state-of-energy level of the energy storage system (34), a maximum allowed mechanical constraint that can be imposed by a drive shaft (27) drivingly connected to said output shaft (25), a maximum allowed mechanical constraint that can be imposed by drive shaft bearings supporting said drive shaft, and the resulting gear ratio of the assumed transmission configuration.

8. The method according to any one of claims 5-7, wherein the vehicle operating information further comprises one or more of the following parameters: a driveline efficiency associated with a transferrable power from a vehicle's power unit (26) to a set of wheels (24), and a difference between the braking torque deliverable from the regenerative braking system (30) and the required braking torque.

9. The method according to any one of claims 5-8, wherein the transmission configuration is assumed by engaging at least one gear from a plurality of shiftable gears of the transmission, wherein each one of the parameters from the vehicle operating information is determined for an instant value upon engagement of a respective gear, and a cumulative value over a period of time following the engagement of a respective gear.

10. The method according to any one of claims 4-9, further comprising:
- obtaining (S9), by the processing circuitry (402), a current vehicle speed; and
- in response to determining that the current vehicle speed is below a speed limit threshold, determining, (S10), by the processing circuitry (402), that the condition for maintaining the currently assumed transmission configuration is fulfilled.

11. The method according to any one of claims 4-10, wherein the transmission (20), preferably the output shaft (25) thereof, is drivingly connectable to a range gear arrangement (40) comprising a low range gear state and a high range gear state, wherein a gear ratio over the range gear arrangement (40) in the low range gear state is higher than a gear ratio in the high range gear state, wherein the method further comprises:
- obtaining (S11), by the processing circuitry (402), range gear arrangement information indicating a current range gear state; and
- in response to determining that the high range gear state is currently engaged, determining (S12), by the processing circuitry (402), that the condition for maintaining the currently assumed transmission configuration is fulfilled.

12. The method according to any one of claims 4-11, wherein the braking information is obtained from a signal indicating a position of a brake pedal, or a signal indicating a braking request from a cruise controller.

13. The method according to any one of claims 4-12, wherein the method further comprises issuing (S13), by the processing circuitry (402), information to the transmission (20) to maintain the currently assumed transmission configuration, if it is determined that a condition for maintaining the currently assumed transmission configuration is fulfilled.

14. A computer program product comprising program code for performing, when executed by the processing circuitry (402), the method of any of claims 4-13.

15. A non-transitory computer-readable storage medium comprising instructions, which when executed by the processing circuitry (402), cause the processing circuitry (402) to perform the method of any of claims 4-13.
